# EUROPÄISCHE PATENTSCHRIFT

(11) **EP 1 761 722 B1**
(45) Veröffentlichungstag und Bekanntmachung des Hinweises auf die Patenterteilung: **17.09.2008**
(21) Anmeldenummer: 05736992.8
(22) Anmeldetag: 05.04.2005
(51) Int. Cl.: F16K 27/04

(54) **SCHALTVENTIL**
ON-OFF VALVE
SOUPAPE DE COMMUTATION

(30) Priorität: 04.05.2004 DE 102004022225; 21.10.2004 DE 102004051368
(43) Veröffentlichungstag der Anmeldung: 14.03.2007
(73) Patentinhaber: Bosch Rexroth AG, 70184 Stuttgart (DE)
(72) Erfinder: DANTLGRABER, Jörg, 97816 Lohr (DE); FÖRSTERLING, Heino, 97816 Lohr (DE); SCHEIDL, Rudolf, A-3253 Erlauf (AT); WINKLER, Bernd, A-4020 Linz (AT)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/EP2005/003572
(87) Internationale Veröffentlichungsnummer: WO 2005/108838

(56) Entgegenhaltungen:
- DE-A1- 4 129 755
- DE-C- 678 978
- GB-A- 1 134 216
- GB-A- 1 155 740
- US-A- 3 952 775
- US-A- 4 314 585

## Beschreibung

Die Erfindung betrifft ein Schaltventil gemäß dem Oberbegriff des Patentanspruchs 1.

Häufig sind Schaltventile als direkt gesteuerte 2/2-Wegeventile in Sitz- oder Schieberbauweise ausgeführt, wobei ein Kolben in eine Grundstellung vorgespannt ist und über einen Elektromagneten in eine Schaltstellung verschoben werden kann. Sollen mit derartigen Schaltventilen relativ große Druckmittelvolumenströme (100 l/min bei 5 bar Druckdifferenz) geschaltet werden, so sind große Nennweiten erforderlich. Aufgrund der großen Nennweiten müssen auch die Kolben/Schieber derartiger herkömmlicher Schaltventile vergleichsweise groß mit erheblicher Masse ausgeführt sein. Bei einigen Anwendungen, beispielsweise in der Mobilhydraulik ist es erforderlich, diese Schaltventile sehr schnell (Schaltzeiten im Bereich von 1 ms) umzuschalten, wobei der geforderte Durchfluss bei bis zu mehreren 100 Litern pro Minute (100 l/min) liegen kann.

Mit herkömmlichen Schaltventilen lässt sich diese Dynamik unter anderem aufgrund der hohen Induktivität der bei den genannten Nenngrößen erforderlichen Schaltmagneten und der relativ großen Masse des Kolbens nicht erzielen. Ein weiterer Nachteil herkömmlicher Schaltventile liegt darin, dass diese insbesondere bei großen Nennweiten vergleichsweise teuer sind.

Demgegenüber liegt der Erfindung die Aufgabe zugrunde, ein Schaltventil zu schaffen, das bei einfachem vorrichtungstechnischen Aufwand ein schnelles Umschalten auch großer Druckmittelvolumenströme ermöglicht.

Diesbezüglich offenbaren die GB 1 134 216 und die US 4 314 585 jeweils Schaltventile gemäß dem Oberbegriff des Anspruchs 1, bei denen ein in einem Gehäuse geführter Kolben jeweils zwei Parallelsteuerkanten aufweist, die jeweils mit einer gehäusefesten Steuerkante einen Teilöffnungsquerschnitt begrenzen, wobei die Teilöffnungsquerschnitte beim Umschalten gemeinsam auf- oder zusteuerbar sind.

Diese Aufgabe wird durch ein Schaltventil mit den Merkmalen des Patentanspruches 1 gelöst.

Erfindungsgemäß hat das Schaltventil einen Kolben, der mit einer Vielzahl von Parallelsteuerkanten ausgebildet ist, die jeweils mit einer gehäusefesten Steuerkante einen Teilöffnungsquerschnitt begrenzen. D.h. erfindungsgemäß wird in der Öffnungsstellung des Schaltventils der Druckmittelvolumenstrom in mehrere Teilvolumenströme unterteilt, die jeweils einen der aufgesteuerten Teilöffnungsquerschnitte durchströmen. Durch die Aufteilung des Druckmittelvolumenstroms über mehrere parallel geschaltete Teilöffnungsquerschnitte kann das Schaltventil mit wesentlich geringeren Hülsendurchmessern als herkömmliche Schaltventile ausgeführt werden. Der Durchmesser des Kolbens des Schaltventils ist dann entsprechend kleiner als bei herkömmlichen Lösungen, so dass aufgrund der verringerten Masse und des kleineren erforderlichen Schaltmagneten eine wesentlich bessere Dynamik erzielbar ist und die Schaltzeiten gegenüber herkömmlichen Lösungen auf einen Bruchteil verkürzt werden. Aufgrund der parallel geschalteten Teilöffnungsquerschnitte baut das erfindungsgemäße Schaltventil zwar etwas länger als ein herkömmliches Schaltventil, dieser Nachteil wird jedoch bei weitem durch die Verringerung des Kolbendurchmessers und die damit einhergehenden kompakteren Ventilgehäuseabmessungen aufgehoben. Die erfindungsgemäße Lösung lässt sich aufgrund der kompakten modularen Ausführung auch wesentlich kostengünstiger als herkömmliche Schaltventile fertigen.

Die jeweils den Teilöffnungsquerschnitt gemeinsam mit der Parallelsteuerkante des Kolbens begrenzende gehäusefeste Steuerkante wird an einem umlaufenden Dichtsteg des Gehäuses ausgebildet.

Eine den Kolben aufnehmende Ventilhülse des Gehäuses ist erfindungsgemäß aus einer Vielzahl von Scheiben zusammengesetzt. Jede der Scheiben trägt einen der Dichtstege und hat zumindest einen Druckmittelkanal, der benachbart zum Dichtsteg in einem von der Scheibe umgriffenen Scheibenraum mündet.

Prinzipiell kann das Schaltventil in Sitz- oder Schieberbauweise ausgeführt sein, bei der Erfindung wird jedoch die letztgenannte Konstruktion bevorzugt.

Bei einer derartigen Konstruktion wird es besonders bevorzugt, wenn die Druckmittelkanäle benachbarter Scheiben abwechselnd hydraulisch mit dem ersten oder dem zweiten Anschluss des Schaltventils verbunden sind.

Der Druckverlust innerhalb der Scheiben lässt sich auf ein Minimum verringern, wenn jeweils zwei Druckmittelkanäle radial beidseitig in den Scheibenraum einmünden. Bei einem konkreten Ausführungsbeispiel werden drei Druckmittelkanal-Paare vorgesehen, wobei ein Paar diagonal durch die Scheibe verläuft, während die beiden anderen Paare seitlich dazu versetzt verlaufen.

Die Kanalführung im erfindungsgemäßen Schaltventil ist weiter vereinfacht, wenn am Außenumfang der Scheibe vier - vorzugsweise kreisförmige - Ausnehmungen ausgebildet werden, die jeweils um 90° zueinander versetzt sind. Die Druckkanäle münden zumindest in einer der Ausnehmungen. Im zusammengebauten Zustand bilden die Ausnehmungen der hintereinander liegenden Scheiben dann jeweils einen Verbindungskanal zwischen den Druckmittelkanälen und den Anschlüssen des Schaltventils.

Bei dem vorbeschriebenen Ausführungsbeispiel wird es bevorzugt, wenn die Druckmittelkanäle dann in jeweils zwei diametral angeordneten Ausnehmungen münden.

Bei einem besonders einfach aufgebauten Ausführungsbeispiel sind alle Scheiben baugleich ausgeführt, wobei benachbarte Scheiben jeweils um 90° versetzt zueinander eingebaut werden, so dass die eine Scheibenteilmenge auf einfache Weise mit dem ersten Anschluss und die versetzt dazu angeordnete Teilmenge auf ebenso einfache Weise mit dem zweiten Anschluss verbindbar ist.

Das Gehäuse des Schaltventils hat eine Aufnahmebuchse, in die die aus Ventilscheiben bestehende Ventilhülse eingesetzt wird. Ein Mantel der Aufnahmebuchse wird von mehreren radialen Anschlussbohrungen durchsetzt, die jeweils mit einem der Anschlüsse hydraulisch verbunden sind und in einem der die Druckmittelkanäle der Scheiben verbindenden Verbindungskanäle münden.

Zur Verringerung oder Vermeidung einer Pulsation oder von Kavitationen oder zur Schaltschlagentkopplung können dem Schaltventil Speicher oder sonstige geeignete Elemente vor- oder nachgeschaltet werden. Bei einer Variante der Erfindung ist das Gehäuse mit mehreren außerhalb der Aufnahmebuchse ausgebildeten Aufnahmen versehen, in die derartige Speicher oder dergleichen einsetzbar sind.

Bei einer anderen Ausführungsform eines Schaltventilgehäuses erfolgt die Druckmittel-Zu- und -Abfuhr über eine Kopfplatte des Gehäuses.

Die in den Scheiben ausgebildeten Dichtungsstege werden vorzugsweise mit sich an die Dichtflächen anschließenden Schrägflächen ausgebildet. Diese Variante ermöglicht es, die Dichtstege sehr dünnwandig auszuführen, wobei es auch bei hohen Arbeitsdrücken zu keinen Verformungen kommt, die zu einem Klemmen des Kolbens führen könnten. Durch die geringe Breite der Dichtstege können die Scheiben sehr dünn ausgeführt werden, so dass das Schaltventil trotz der Vielzahl von hintereinander geschalteten Parallelsteuerkanten kurz baut. Da diese Geometrie der Dichtstege Gegenstand einer eigenen, parallelen Anmeldung ist, kann auf weitere Erläuterungen verzichtet werden.

Die Betätigung des Schaltventils erfolgt vorzugsweise über einen Magneten. Besonders bevorzugt wird die Anwendung eines schnell schaltenden Flachankermagneten, der über eine Hebelübersetzung auf den Kolben wirkt. Diese Hebelübersetzung ist bei einem bevorzugten Ausführungsbeispiel der Erfindung als Festkörpergelenk ausgeführt.

Bei einem besonders bevorzugten Ausführungsbeispiel der Erfindung sind sechs Scheiben hintereinander angeordnet, so dass der Druckmittelvolumenstrom über drei Teilöffnungsquerschnitte geführt wird. Selbstverständlich kann das Schaltventil auch mit mehr oder weniger Scheiben ausgeführt werden.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
Figur 1 einen Längsschnitt durch ein erstes Ausführungsbeispiel eines Schnellschaltventils;
Figur 2 eine Vorderansicht und eine geschnittene Draufsicht einer Scheibe des Schnellschaltventils aus Figur 1;
Figur 3 eine Detaildarstellung des Schnellschaltventils aus Figur 1;
Figur 4 dreidimensionale Darstellungen eines Ventilgehäuses des Schnellschaltventils aus Figur 1;
Figur 5 Schnittdarstellungen des Ventilgehäuses aus Figur 4 und
Figur 6 eine Schnittdarstellung eines weiteren Ausführungsbeispiels eines Schnellschaltventils.

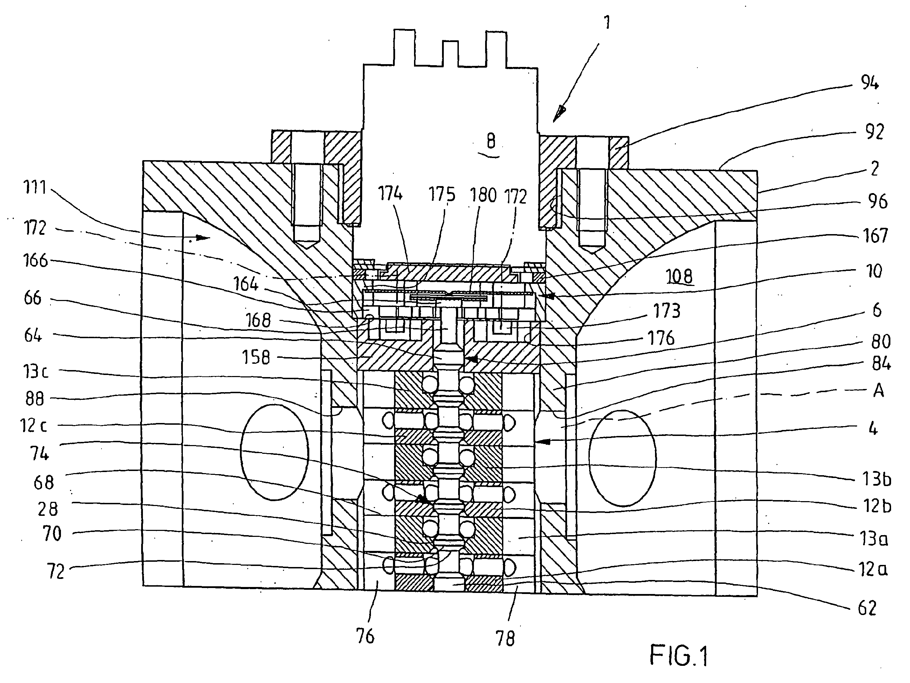

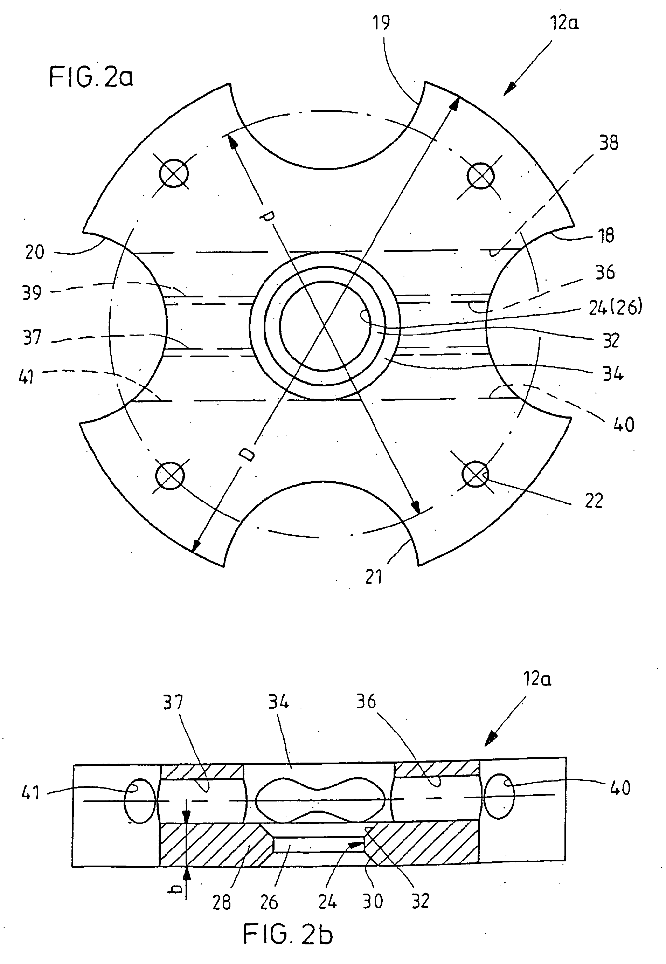

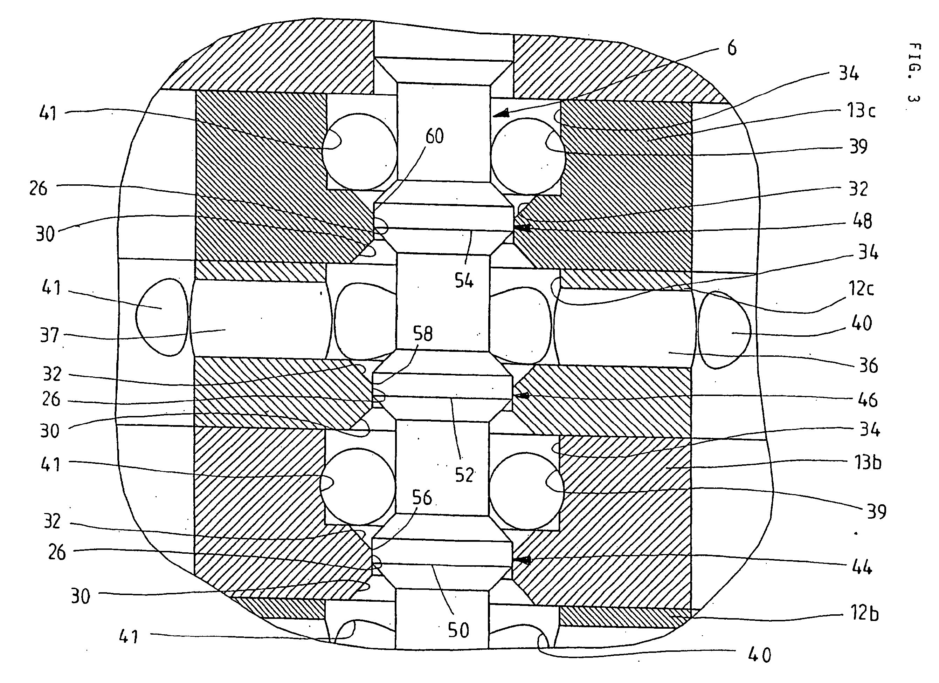

In Figur 1 ist ein Längsschnitt durch ein erstes Ausführungsbeispiel eines Schnellschaltventils 1 dargestellt. Das Schnellschaltventil 1 hat einen Eingangsanschluss und einen Ausgangsanschluss, die in der Darstellung gemäß Figur 1 nicht sichtbar sind. Einer der Anschlüsse, beispielsweise der gestrichelt angedeutete Eingangsanschluss A liegt etwa in der Zeichenebene, während der andere Anschluss, beispielsweise der Ausgangsanschluss B in einer senkrecht zur Zeichenebene verlaufenden Ebene liegt. Das in Schieberbauweise ausgeführte Schnellschaltventil 1 hat ein Gehäuse 2 mit einer Ventilhülse 4, in der ein Kolben oder Ventilschieber 6 axial verschiebbar (in Figur 1 in Vertikalrichtung) geführt ist. Die Betätigung des Ventilschiebers 6 erfolgt über einen Magneten, der bei dem dargestellten Ausführungsbeispiel als Flachankermagnet 8 ausgeführt ist, der über eine Hebelübersetzung 10 auf den Ventilschieber 6 wirkt. Die Ventilhülse 4 ist aus einer Vielzahl von Scheiben 12a, 12b, 12c und 13a, 13b, 13c gebildet, wobei an jeder der Scheiben 12, 13 ein Dichtsteg 28 ausgebildet ist, der mit einem Steuerbund (siehe 72, 74 in Fig. 1 und 44, 46, 48 in Fig.3) des Ventilschiebers 6 zusammenwirkt. Die einzelnen Scheiben 12, 13 sind identisch aufgebaut und sind lediglich um 90° versetzt zueinander in das Gehäuse 2 eingesetzt. Einzelheiten der aus einer Vielzahl von Scheiben 12, 13 zusammengesetzten Hülse 4 werden im Folgenden anhand der Figuren 2 und 3 erläutert.

Figur 2a eine Ansicht, die derjenigen auf die Scheiben 12a, 12b und 12c in Figur 1 entspricht. Die Figur 2b zeigt eine Vorderansicht auf diese Scheiben. Da alle Scheiben 12, 13 prinzipiell den gleichen Aufbau haben, wird anhand Figur 2 lediglich der Aufbau der Scheibe 12a erläutert. Diese hat in der Vorderansicht eine kreisförmige Großfläche mit dem Außendurchmesser D. Um 90° versetzt zueinander sind am Außenumfang der Scheibe 12a vier Ausnehmungen 18, 19, 20, 21 ausgebildet, die in der Vorderansicht (Figur 2a) etwa halbkreisförmig ausgebildet sind. Auf einem gemeinsamen Teilkreisdurchmesser d sind vier um 45° zu den Ausnehmungen 18, 19, 20, 21 versetzte Befestigungsbohrungen 22 ausgebildet, durch die hindurch sich Spannschrauben der Ventilhülse 4 erstrecken. In der Mitte der Scheibe 12a ist eine Scheibenbohrung 24 vorgesehen, deren in Figur 2b sichtbare Umfangsfläche eine Dichtfläche 26 eines Dichtstege 28 bildet. Die umlaufende Dichtfläche 26 des Dichtstegs 28 geht in zwei schräg dazu angeordnete Schrägflächen 30, 32 über, die wesentlich mehr als die herkömmlichen Fasen ausgeprägt sind. Die Breite b des Dichtstegs 28 ist vergleichsweise gering ausgebildet. Ohne diese Schrägflächen 30, 32 würde sich der Dichtsteg 28 derart verformen, dass dies bei größeren Druckdifferenzen zum Klemmen des Ventilschiebers 6 führt. Es zeigte sich, dass durch diese Schrägflächen 30, 32 ein seitliches Ausbiegen verhindert und sogar eine bessere Zentrierung des Ventilschiebers 6 ermöglicht wird. Die Ausgestaltung des Dichtstegs 28 mit den beiden Schrägflächen 30, 32 ist - wie erwähnt - Gegenstand einer weiteren, parallel hinterlegten Patentanmeldung.

Wie aus der in Figur 2b dargestellten geschnittenen Draufsicht entnehmbar ist, ist die Scheibenbohrung 24 im Anschluss an die Schrägfläche 32 zu einem Scheibenraum 34 erweitert. Gemäß der in Figur 2a angeordneten Vorderansicht, münden in diesem Scheibenraum 34 Druckmittelkanäle 36, 37, 38, 39, 40, 41, wobei die Druckmittelkanäle 36, 37; 40, 41 und 38, 39 jeweils ein koaxial angeordnetes Paar bilden und beidseitig in den Scheibenraum 34 einmünden. Der andere Endabschnitt der Kanäle 36, 38, 40 mündet in der Umfangskante der Ausnehmung 18, der andere Endabschnitt der drei weiteren Druckmittelkanäle 37, 39, 41 mündet in der diametral dazu angeordneten Ausnehmung 20. Wie aus Figur 2 hervorgeht, ist das Druckmittelkanal-Paar 36, 38 in einer Diagonalen der Scheibe 12a angeordnet, die beiden andere Druckmittelpaare 38, 39; 40, 41 sind parallel dazu versetzt.

In der Schnittdarstellung gemäß Figur 2b sind lediglich die beiden diagonal verlaufenden Druckmittelkanäle 36, 37 und 40, 41 sichtbar, wobei die beiden letztgenannten Kanäle 40, 41 im Mündungsbereich im Druckraum 34 zusammenlaufen.

Wie vorstehend erwähnt, sind jeweils benachbarte Scheiben 12, 13 um 90° versetzt zueinander angeordnet. D.h. in der Darstellung gemäß Figur 1 befinden sich die Scheiben 12a, 12b, 12c in der in Figur 2b dargestellten Einbaulage, während die benachbarten Scheiben 13a, 13b, 13c um 90° versetzt dazu angeordnet sind, so dass die Achsen der Druckmittelkanäle 36 bis 41 senkrecht zur Zeichenebene verlaufen, während sie bei den anderen Scheiben 12a, 12b, 12c parallel zur Zeichenebene angeordnet sind.

Unter der Annahme, dass die Scheiben 13a, 13b, 13c gegenüber den Scheiben 12a, 12b, 12c um 90° im Uhrzeigersinn verdreht sind, sieht man in den Darstellungen gemäß Figur 1 und 3 dann entsprechend die Mündungsquerschnitte der Druckmittelkanäle 39, 41 in die Scheibenräume 34 der Scheiben 13a, 13b, 13c.

Der Ventilschieber 6 hat gemäß Figur 1 fünf Steuerbünde, von denen in Figur 3 die Steuerbünde 44, 46, 48 sichtbar sind. Diese sind in der dargestellten Grundposition mit positiver Überdeckung mit Bezug zu den Dichtflächen 26 der Dichtstege 28 ausgeführt. Die Stirnflächen der Steuerbünde 44, 46, 48 sind abgeschrägt, wobei jeweils eine Steuerkante 50, 52, 54 ausgebildet wird, die mit der in Figur 3 oben liegenden Umfangskante der Dichtfläche 26 - im Folgenden gehäusefeste Steuerkanten 56, 58, 60 genannt - zusammenwirken.

Gemäß Figur 1 sind an den Endabschnitten des Ventilschiebers 6 zwei Führungsbünde 62, 64 ausgebildet. An den in Figur 1 oberen Führungsbund 64 schließt sich ein Axialvorsprung 66 an, der in Wirkverbindung mit der Hebelübersetzung 10 steht.

Wie insbesondere Figur 3 entnehmbar ist, stehen in der dargestellten Grundposition des Ventilschiebers 6 die Steuerkanten 50, 52, 54 und die in Figur 1 gekennzeichneten entsprechenden Steuerkanten 68 der in Figur 3 nicht dargestellten Steuerbünde 72, 74 etwa mittig mit Bezug zur Dichtfläche 26, so dass die axiale Dichtlänge zwischen den Steuerbünden 44, 46, 48, 72, 74 und den zugeordneten Dichtflächen 26 etwa die halbe Axiallänge der Dichtflächen 26 beträgt.

Wie insbesondere Figur 1 entnehmbar ist, fluchten die vier gleichmäßig am Umfang verteilten Ausnehmungen 18, 20 der Scheiben 12a, 12b, 12c sowie die Ausnehmungen 19, 21 der dazu um 90° versetzt eingebauten Scheiben 13a, 13b, 13c, so dass vier achsparallel zur Ventilachse verlaufende Verbindungskanäle gebildet werden, von denen die Verbindungskanäle 76, 78 in Figur 1 sichtbar sind, während die beiden anderen, um 90° dazu versetzten Verbindungskanäle oberhalb bzw. unterhalb der Zeichenebene angeordnet sind. In den dargestellten Verbindungskanälen 76, 78 münden jeweils die Druckmittelkanäle 36, 37, 38, 39, 40 der Scheiben 12a, 12b, 12c, während in den nicht sichtbaren Verbindungskanälen die entsprechenden Druckmittelkanäle der um 90° versetzt angeordneten Scheiben 13a, 13b, 13c münden.

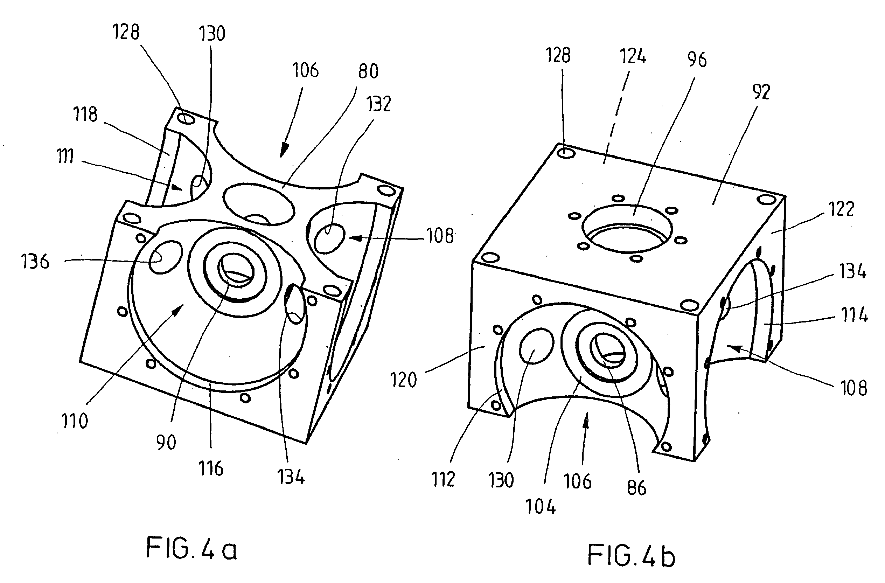

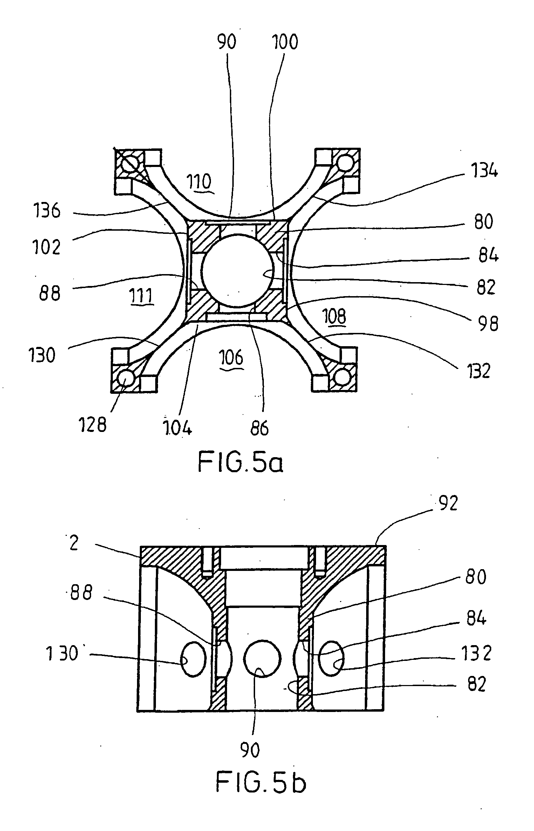

Wie aus Figur 1 hervorgeht, sind die Scheiben 12, 13 in eine Aufnahmebuchse 80 eingesetzt, die einstückig am Gehäuse 2 ausgebildet ist. Der Aufbau des Gehäuses wird im Folgenden anhand der Figuren 4 und 5 näher erläutert. In Figur 4b ist eine Ansicht von oben (Figur 1) auf das Ventilgehäuse und Figur 4a zeigt eine Unteransicht auf das Ventilgehäuse 2. Figur 5a zeigt einen Horizontalschnitt durch das Gehäuse in der Darstellung gemäß Figur 4b und in Figur 5b ist ein Vertikalschnitt durch das Gehäuse 2 gezeigt, der der Schnittdarstellung in Figur 1 entspricht.

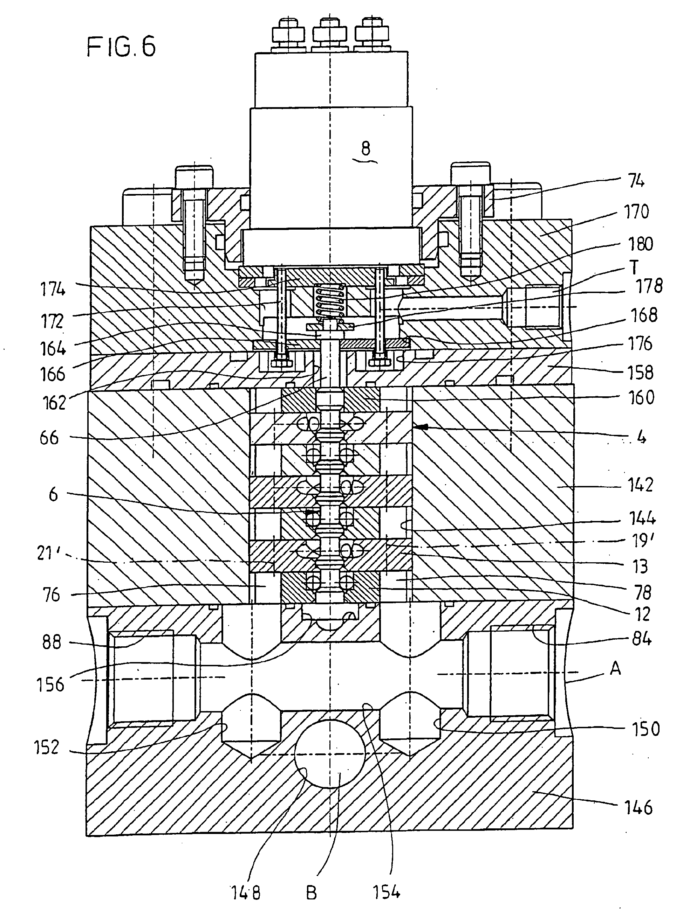

Der Durchmesser einer Innenumfangswandung 82 (siehe Figur 5b) der Aufnahmebuchse 80 entspricht dabei im Wesentlichen dem Außenumfang D der Scheiben 12, 13. Wie insbesondere dem in Figur 5a dargestellten Horizontalschnitt entnehmbar ist, ist die Wandung der Aufnahmebuchse 80 von vier um 90° zueinander versetzten radialen Anschlussbohrungen 84, 86, 88, 90 durchsetzt, wobei gemäß Figur 1 die Anschlussbohrungen 84, 88 in den von den Scheiben gebildeten Verbindungskanälen 78 bzw. 76 und die beiden anderen, senkrecht dazu verlaufenden Anschlussbohrungen 86, 90 in den in Figur 1 nicht dargestellten beiden anderen Verbindungskanälen münden. Es sei angenommen, dass ein Anschluss des Schaltventils 1, beispielsweise der Eingangsanschluss A mit den beiden Verbindungskanälen 78, 76 verbunden ist, während der Ausgangsanschluss B mit den anderen, nicht dargestellten Verbindungskanälen verbunden ist, die durch die Scheiben 13 gebildet sind. D.h. die Scheiben sind jeweils wechselweise mit dem Arbeitsanschluss A und dem Arbeitsanschluss B verbunden, wobei die Druckmittelzufuhr in die Scheibenräume 34 jeweils beidseitig über die Druckmittelkanäle 36 bis 41 erfolgt. Die Anschlüsse A, B sind in einer Bodenplatte 146 ausgebildet, deren Aufbau anhand von Figur 6 näher erläutert wird.

Gemäß den Darstellungen in Figur 1 und 5 geht die Aufnahmebuchse 80 in eine Deckplatte 92 über, die auch in Figur 4 rechts gut sichtbar ist. Auf dieser Deckplatte ist der Flachankermagnet 8 über einen Befestigungsflansch 94 befestigt, der in eine koaxial zur Aufnahmebuchse ausgebildete Aufnahmebohrung 96 (siehe Figur 4b) eintaucht, die nach unten hin zurückgestuft ist.

Wie insbesondere den Figuren 4 und 5 entnehmbar ist, sind die Anschlussbohrungen stufenförmig zu Stirnflächen 98, 100, 102, 104 von Aufnahmeräumen 106, 108, 110, 111 des Gehäuses 2 hin erweitert. Gemäß Figur 4 sind die Umfangswandungen dieser Aufnahmeräume kugelsegmentförmig gekrümmt und münden über Zylinderflächenabschnitte 112, 114, 116, 118 (siehe Figur 4b) in Seitenflächen 120, 122, 124 und 126 des quaderförmigen Gehäuses 2. Gemäß Figur 4 sind die Aufnahmeräume 106, 108, 110, 111 gegenüber der Deckplatte 92 nach unten versetzt, so dass sie in der Bodenfläche auslaufen, während die Deckplatte von den Aufnahmeräumen 106, 108, 110, 111 nicht geschnitten wird. Diese Bodenfläche ist in Figur 4a sichtbar. Auf diese Bodenfläche wird die Bodenplatte 146 (Figur 6) aufgeschraubt. Der Boden des in Figur 4 dargestellten Gehäuses 2 ist durch die mittlere Aufnahmebuchse 80 sowie die verbleibenden, ein Kreuz bildenden Gehäusewandungen gebildet, die sich zu den Eckbereichen des Gehäuses hin erstrecken, in denen jeweils Befestigungsbohrungen 128 ausgebildet sind, die sich über die gesamte Höhe des Gehäuses 2 erstrecken. Wie insbesondere aus dem Horizontalschnitt in Figur 5a hervorgeht, ist der Durchmesser der kugelsegmentförmigen Aufnahmeräume 106, 108, 110, 111 so gewählt, dass sich die Umfangswandungen benachbarter Aufnahmeräume schneiden, so dass vier Durchbrüche 130, 134, 136 und 138 entstehen. Durch diese Konstruktion wird einerseits das Gewicht des Gehäuses 2 minimiert und andererseits dienen die Aufnahmeräume zur vollständigen oder abschnittsweise Aufnahme von Speichern oder sonstigen, eine Elastizität zur Verfügung stellenden Bauelementen, die dazu beitragen, Druckpulsationen und Schaltschläge zu vermeiden und Kavitationserscheinungen zu mindern. Diese Speicher können im Druckmittelvolumenstrom den Öffnungsquerschnitten des Schaltventils 1 vor- und/oder nachgeschaltet werden und sind über die Anschlussbohrungen 84, 86, 88, 90 mit den Verbindungskanälen 76, 78 verbunden.

Bei dem Flachankermagneten handelt es sich um ein handelsübliches Bauelement, so dass Detailbeschreibungen entbehrlich sind. Wie eingangs erwähnt, eine Ankerplatte 174 des Flachankermagneten 8 über die Hebelübersetzung 10 in Wirkverbindung mit dem Axialvorsprung 66 des Ventilschiebers 6.

Bei dem in Figur 1 dargestellten Ausführungsbeispiel besteht die Hebelübersetzung 10 aus mehreren - beispielsweise vier Hebeln 166, 167, die über strichpunktiert angedeutete Zugstäbe 172 mit der Ankerplatte 174 verbunden sind. Dabei haben die Zugstäbe 172 Köpfe 173, die in entsprechende Taschen 176 einer den stirnseitigen Abschluss der Ventilhülse 4 bildenden Zwischenplatte 158 eintauchen. Die Hebel 166, 167 sitzen mit ihren radial aussenliegenden Endabschnitten einerseits auf einer Ringschulter 168 der Zwischenplatte 158 auf, wobei die Ringschulter in Radialrichtung durch eine Distanzhülse 175 begrenzt ist. Die Hebel 166, 167 sind zwischen der Ringschulter der Zwischenplatte 158 und einer dazu parallel verlaufenden Schulter der Distanzhülse 175 eingeklemmt, so dass sie in Radialrichtung frei auskragen. An einer radial vorspringenden Schulter dieser Distanzhülse 175 ist eine Rückstellfeder 180 abgestützt, die mit dem Axialvorsprung 66 des Ventilschiebers 6 verbunden ist. Die Ankerplatte 174 ist mit einem geringen Spalt mit Bezug zu dem nicht dargestellten Flachanker des Flachankermagneten 8 angeordnet.

Die Endabschnitte der Hebel 166, 167 hintergreifen einen am Ende des Axialvorsprungs 66 angeordneten Bund 164, an dem die Rückstellfeder 180 angreift. Beim dargestellten Ausführungsbeispiel ist diese Rückstellfeder als Biegefeder ausgeführt.

Wird nun der Flachankermagnet 8 bestromt, so bewegt sich die Ankerplatte 174 in der Darstellung gemäß Figur 1 nach oben und die Zugstäbe 172 lenken die seitlich am Gehäusedeckel 170 abgestützten Hebel 166 aus, so dass der Hub des Ventilschiebers 6 nach dem Hebelgesetz übersetzt wird, wobei das Übersetzungsverhältnis dem Verhältnis zwischen dem Abstand der Auflagefläche der Hebel 166 an der Distanzhülse 175 bzw. der Zwischenplatte 158 und dem Angriffspunkt am Ventilschieber 6 sowie dem Abstand der Zugstäbe 172 zur oben genannten Auflagefläche der Hebel 166 entspricht. Beim Stromlosschalten bewegt sich die Ankerplatte 174 wieder zurück und die Hebel 166 federn wieder in die dargestellte Ausgangsposition zurück. Die Rückstellbewegung des Ventilschiebers 6 wird durch die Rückstellfeder 180 unterstützt.

Es sei angenommen, dass am Arbeitsanschluss A hoher und somit an den beiden Anschlussbohrungen 84, 88 ein hoher Versorgungsdruck anliegt, während an den beiden anderen Anschlussbohrungen 86, 90 Niederdruck oder Tankdruck anliegt. Entsprechend liegt bei geschlossenem Schaltventil 1 der höhere Versorgungsdruck auch in den Scheibenräumen 34 der Scheiben 12a, 12b, 12c an, während der Tankdruck in den Scheibenräumen 34 der Scheiben 13a, 13b, 13c herrscht. Die mit den unterschiedlichen Drücken beaufschlagten Druckräume sind durch die dichtend an den Umfangsflächen der Dichtflächen 26 der Dichtstege 28 anliegenden Steuerbünde 44, 46, 48, 72, 74 gegeneinander abgesperrt. Bei Bestromung des Flachankermagneten 8 wird die Bewegung des Flachankers über die Hebelübersetzung 10 auf den Ventilschieber 6 übertragen, so dass dieser in der Darstellung gemäß Figur 1 nach oben bewegt wird. Durch die Steuerkanten 50, 52, 54, 68, 70 werden dann Teilöffnungsquerschnitte aufgesteuert, die von den genannten Steuerkanten sowie den gehäusefesten Steuerkanten 56, 58, 60 begrenzt sind. Diese Teilöffnungsquerschnitte verbinden die jeweils benachbarten Scheibenräume 34 miteinander, so dass mehrere Druckmittelteilströme aus den beiden Verbindungskanälen 76, 78 über die geöffneten Teilöffnungsquerschnitte in die Scheibenräume der Scheiben 13a, 13b, 13c einströmen, von dort dann über die Druckmittelkanäle 36 bis 41 in die nicht dargestellten Verbindungsräume (ober- und unterhalb der Zeichenebene in Figur 1) einströmen und dann summiert über die Anschlussbohrungen 86, 90 in gegebenenfalls nachgeschaltete Speicher abströmen oder zusammengefasst werden.

Aufgrund des sehr geringen Ventilschieberdurchmessers (bspw. 6 mm) und der äußerst geringen Breite B der Dichtstege 28 kann mit einem sehr kleinen Hub bei extrem hoher Geschwindigkeit umgeschaltet werden, so dass sich außerordentlich kurze Schaltzeiten von beispielsweise 1 ms bei einem Druckmittelvolumenstrom von 75 l/min (bei einem Druckabfall von 5 bar) erzielen lassen. Derartige Schaltventile lassen sich bei einer Vielzahl von Sicherheitsfunktionen und auch Regelfunktionen, wie beispielsweise Positionieraufgaben und bspw. auch bei einem schaltenden Hydrotransformator einsetzen.

In Figur 6 ist ein weiteres Ausführungsbeispiel eines erfindungsgemäßen Schaltventils 1 erläutert.

Im Unterschied zum vorbeschriebenen Ausführungsbeispiel wird bei der in Figur 6 gezeigten Konstruktion ein anderer Gehäuseaufbau sowie eine etwas andere Hebelübersetzung für den Flachankermagneten 8 verwendet. Der Aufbau der aus mehreren Scheiben 12, 13 zusammengesetzten Ventilhülse 4 ist im wesentlichen identisch wie beim vorbeschriebenen Ausführungsbeispiel, wobei die Scheiben 13 nicht mit den Ausnehmungen 19, 21 ausgebildet sind. Diese sind quer zur Achse der Druckmittelkanäle 36 - 41 orientiert. Anstelle der Ausnehmungen sind in den Scheiben 13 Durchbrüche 19', 21' vorgesehen, die strichpunktiert angedeutet sind und die Funktion der Ausnehmungen 19, 20 übernehmen. Der Schnitt gemäß Figur 6 verläuft bei den Scheiben 13 somit bis zur Außenumfangskante.

Bei dem in Figur 6 dargestellten Ausführungsbeispiel ist die Ventilhülse 4 in einer Gehäusebuchse 142 aufgenommen. Diese ist fußseitig von einer Bodenplatte 146 verschlossen, in der die Anschlüsse A und B des Schnellschaltventils 1 ausgebildet sind. Beide Anschlüsse A, B sind als Doppelanschlüsse zur beidseitigen Zuführung von Druckmittel ausgebildet und sind an sich verzweigende Bereiche einer Eingangs- und einer Ausgangsleitung angeschlossen. Der Anschluss A ist hydraulisch mit zwei Anschlussbohrungen 84, 88 verbunden, die diametral zueinander angeordnet sind und die über einen Eingangskanal 148 miteinander in Verbindung stehen. Dieser quer zur Ventilachse verlaufende Eingangskanal 148 wird von zwei Sacklochbohrungen 150, 152 geschnitten, die in den beiden Verbindungskanälen 76, 78 der Ventilhülse 4 münden.

Diese Verbindungskanäle 76, 78 sind dann beispielsweise mit den Druckmittelkanälen 36 bis 41 der Scheiben 13 verbunden. Entsprechend sind die Scheiben 12 hydraulisch mit dem Anschluss B verbunden. Dessen Doppelanschlüsse liegen ober- und unterhalb der Zeichenebene, wobei im Schnitt gemäß Figur 6 lediglich der Verbindungskanal 154 zwischen den beiden nicht dargestellten Anschlussbohrungen sichtbar ist. D.h. dieser Verbindungskanal 154 verläuft um 90° versetzt unterhalb (Figur 6) des Verbindungskanals 148 und mündet beidseitig in den genannten Anschlussbohrungen. Die Verbindung zu den beiden in Figur 6 nicht sichtbaren, von den Scheiben 12, 13 gebildeten Verbindungskanälen erfolgt wiederum über jeweils eine Sacklochbohrung 150, 152, die ober- und unterhalb der Zeichenebene angeordnet sind. D.h. die Kanalführung für den Doppelanschluss B erfolgt in gleicher Weise wie beim Doppelanschluss A mit dem einzigen Unterschied, dass die Kanäle um 90° versetzt zueinander angeordnet sind. Eine derartige Bodenplatte 146 wird auch beim Ausführungsbeispiel gemäß Figur 1 auf das Gehäuse aufgesetzt.

In der der Gehäusebuchse 142 zuweisenden Stirnfläche der Bodenplatte 146 ist noch eine Einsenkung 156 vorgesehen, die abschnittsweise von der Stirnfläche des Ventilschiebers 6 begrenzt ist. Diese Stirnfläche ist zu einem Tankanschluss hin entlastet.

Der kopfseitige Abschluss der Gehäusebuchse 142 ist durch eine Zwischenplatte 158 gebildet, wobei zwischen dieser und der benachbarten Scheibe 13 eine Distanzscheibe 160 vorgesehen ist, so dass die Scheiben 12, 13 dichtend aneinander gepresst werden. Die Zwischenplatte 158 hat einen Durchbruch, durch den hindurch sich der Axialvorsprung 66 des Ventilschiebers 6 erstreckt. Bei dem dargestellten Ausführungsbeispiel hat der Axialvorsprung 66 einen Bund 164, an dem die Hebel 166 abgestützt sind. Diese greifen am Axialvorsprung 66 an und liegen von unten (Ansicht nach Figur 6) an der Stirnfläche des Bundes 164 an und sind mit ihren radial aussenliegenden Abschnitten in einer Ringausnehmung 168 eines Gehäusedeckels 170 abgestützt. Die Hebel 166 haben einen Durchbruch, durch den sich jeweils ein Zugstab 172 erstreckt, der einerseits mit der Ankerplatte 174 des Flachankermagneten 8 verbunden ist und andererseits an der Unterseite (Figur 6) der Hebel 166 angreift. Diese Angriffsabschnitte der Zugstäbe 172 tauchen beim dargestellten Ausführungsbeispiel in Taschen 176 in der oberen Stirnfläche der Zwischenplatte 158 ein.

An der Oberseite des Bunds 164 ist ein Federteller 178 abgestützt, an dem eine Rückstellfeder 180 angreift, die bei diesem Ausführungsbeispiel als Spiralfeder ausgeführt ist und die am Flachanker 174 abgestützt ist.

Der Federraum für die Rückstellfeder 180 und die obere Stirnfläche des Ventilschiebers 6 sind wiederum zu einem Tank T oder zu einem Niederdruckanschluss hin entlastet. Die Befestigung des Flachankermagneten 8 erfolgt in der gleichen Weise wie beim vorbeschriebenen Ausführungsbeispiel über einen Befestigungsflansch 74.

Offenbart ist ein Schaltventil, insbesondere ein Schnellschaltventil, bei dem ein Kolben in eine Grundposition vorgespannt ist. Der Kolben hat eine Vielzahl von Parallelsteuerkanten, über die beim Umschalten eine Vielzahl von hydraulisch parallel angeordneten Teilöffnungsquerschnitten gemeinsam auf- oder zusteuerbar ist.

### Bezugszeichenliste:

- 1: Schnellschaltventil
- 2: Gehäuse
- 4: Ventilhülse
- 6: Ventilschieber
- 8: Flachankermagnet
- 10: Hebelübersetzung
- 12: Scheibe
- 13: Scheibe
- 16: Steuerbund
- 18: Ausnehmung
- 19: Ausnehmung
- 19': Durchbruch
- 20: Ausnehmung
- 21: Ausnehmung
- 21': Durchbruch
- 22: Befestigungsbohrung
- 24: Scheibenbohrung
- 26: Dichtfläche
- 28: Dichtsteg
- 30: Schrägfläche
- 32: Schrägfläche
- 34: Scheibenraum
- 36: Druckmittelkanal
- 37: Druckmittelkanal
- 38: Druckmittelkanal
- 39: Druckmittelkanal
- 40: Druckmittelkanal
- 41: Druckmittelkanal
- 44: Steuerbund
- 46: Steuerbund
- 48: Steuerbund
- 50: Steuerkante
- 52: Steuerkante
- 54: Steuerkante
- 56: gehäusefeste Steuerkante
- 58: gehäusefeste Steuerkante
- 60: gehäusefeste Steuerkante
- 62: Führungsbund
- 64: Führungsbund
- 66: Axialvorsprung
- 68: Steuerkante
- 70: Steuerkante
- 72: Steuerbund
- 74: Steuerbund
- 76: Verbindungskanal
- 78: Verbindungskanal
- 80: Aufnahmebuchse
- 82: Innenumfangswandung
- 84: Anschlussbohrung
- 86: Anschlussbohrung
- 88: Anschlussbohrung
- 90: Anschlussbohrung
- 92: Deckplatte
- 94: Befestigungsflansch
- 96: Aufnahmebohrung
- 98: Stirnfläche
- 100: Stirnfläche
- 102: Stirnfläche
- 104: Stirnfläche
- 106: Aufnahmeraum
- 108: Aufnahmeraum
- 110: Aufnahmeraum
- 111: Aufnahmeraum
- 112: Zylinderflächenabschnitt
- 114: Zylinderflächenabschnitt
- 116: Zylinderflächenabschnitt
- 118: Zylinderflächenabschnitt
- 120: Seitenwandung
- 122: Seitenwandung
- 124: Seitenwandung
- 126: Seitenwandung
- 128: Befestigungsbohrung
- 130: Durchbruch
- 134: Durchbruch
- 136: Durchbruch
- 138: Durchbruch
- 142: Gehäusebuchse
- 144: Innenbohrung
- 146: Bodenplatte
- 148: Eingangskanal
- 150: Sacklochbohrung
- 152: Sacklochbohrung
- 154: Verbindungskanal
- 156: Einsenkung
- 158: Zwischenplatte
- 160: Distanzscheibe
- 162: Durchbruch
- 164: Bund
- 166: Hebel
- 167: Hebel
- 168: Ringschulter
- 170: Gehäusedeckel
- 172: Zugstab
- 173: Kopf
- 174: Ankerplatte
- 175: Distanzhülse
- 176: Tasche
- 178: Federteller
- 180: Rückstellfeder

## Patentansprüche

1. Schaltventil mit einem in einem Gehäuse (2) geführten Kolben (6), der in eine Grundposition vorgespannt ist und der elektrisch oder hydraulisch umschaltbar ist, um eine Verbindung zwischen einem ersten und einem zweiten Anschluss (A, B) abzusperren oder zu öffnen, wobei der Kolben (6) mehrere Parallelsteuerkanten (50, 52, 54, 68, 70) hat, die jeweils mit einer gehäusefesten Steuerkante (56, 58, 60) einen Teilöffnungsquerschnitt begrenzen, wobei diese hydraulisch parallel angeordneten Teilöffnungsquerschnitte beim Umschalten gemeinsam auf- oder zusteuerbar sind, **dadurch gekennzeichnet, dass** die gehäusefesten Steuerkanten (56, 58, 60) jeweils an einem umlaufenden Dichtsteg (28) des Gehäuses (2) ausgebildet sind, und dass eine Ventilhülse (4) des Gehäuses (2) aus einer Vielzahl von Scheiben (12, 13) zusammengesetzt ist, an denen jeweils einer der Dichtstege (28) ausgebildet ist, und die jeweils mit zumindest einem Druckmittelkanal (36, 37, 38, 39, 40, 41) ausgeführt sind, der benachbart zum Dichtsteg (28) in einem radial erweiterten Scheibenraum (34) mündet.

2. Schaltventil nach Patentanspruch 1, wobei der Druckmittelvolumenstrom stromaufwärts der Teilöffnungsquerschnitte in Teilströme aufgeteilt und diese stromabwärts summiert werden.

3. Schaltventil nach Patentanspruch 1, wobei der Kolben als Ventilschieber (6) ausgeführt ist.

4. Schaltventil nach einem der Patentansprüche 1 bis 3, wobei die Druckmittelkanäle (36 - 41) benachbarter Scheiben (12, 13) abwechselnd hydraulisch mit dem ersten oder dem zweiten Anschluss (A, B) verbunden sind.

5. Schaltventil nach einem der vorhergehenden Patentansprüche, wobei in einer Scheibe (12, 13) jeweils koaxial zueinander angeordnete Druckmittelkanäle (36, 37; 38, 39; 40, 41) ein Druckmittelkanalpaar bilden, das beidseitig in den Scheibenraum (34) einmündet.

6. Schaltventil nach Patentanspruch 5, wobei drei Druckmittelkanalpaare (36, 37; 38, 39; 40, 41) vorgesehen sind, die parallel zur Scheibenebene verlaufen und von denen eines als Diagonale und zwei achsparallel dazu angeordnet sind.

7. Schaltventil nach einem der vorhergehenden Patentansprüche, wobei die Scheiben (12, 13) einen im wesentlichen kreisförmigen Außenumfang haben, wobei vier um 90° zueinander versetzte, vorzugsweise kreisbogenförmige Ausnehmungen (18, 19, 20, 21) vorgesehen sind, und in zumindest einer der Ausnehmungen (18,19,20,21) der Druckmittelkanal (36, 37, 38, 39, 40, 41) mündet, und wobei diese Ausnehmungen (18, 19, 20, 21) in der Einbaulage jeweils einen Verbindungskanal (76, 78) zwischen den Druckmittelkanälen (36 - 41) und den Anschlüssen (A, B) bilden.

8. Schaltventil nach Patentanspruch 6 und 7, wobei die Druckmittelkanäle (36 - 41) in zwei diametral angeordneten Ausnehmungen (18, 20) münden.

9. Schaltventil nach Patentanspruch 7 oder 8, wobei jede zweite Scheibe (13) der Scheibenhülse (4) um 90° versetzt zur benachbarten Scheibe (12) angeordnet ist.

10. Schaltventil nach Patentanspruch 8 oder 9, wobei das Gehäuse (2) eine Aufnahmebuchse (80) für die Scheiben (12, 13) hat, deren Mantel von radialen Anschlussbohrungen (84, 86, 88, 90) durchsetzt ist, die jeweils mit einem der Anschlüsse (A, B) hydraulisch verbunden sind und in einem der Verbindungskanäle (76, 78) münden.

11. Schaltventil nach Patentanspruch 10, wobei die Anschlussbohrungen (84, 86, 88, 90) als sich kreuzende Diagonalbohrungen ausgebildet sind.

12. Schaltventil nach Patentanspruch 10 oder 11, wobei radial außerhalb der Anschlussbohrungen (84, 86, 88, 90) im Gehäuse (2) Aufnahmeräume (106, 108, 110, 111) für Speicher oder dergleichen ausgebildet sind.

13. Schaltventil nach Patentanspruch 7, 8 oder 9, wobei die Anschlüsse (A, B) in einer Bodenplatte (146) des Gehäuses (2) ausgebildet sind und über Winkelbohrungen (148, 152, 150; 154) mit den Verbindungskanälen (76, 78) verbunden sind.

14. Schaltventil nach einem der vorhergehenden Patentansprüche, wobei die Dichtstege (28) beidseitig mit umlaufenden Schrägflächen (30, 32) versehen sind.

15. Schaltventil nach einem der vorhergehenden Patentansprüche, wobei der Kolben (6) über einen Elektromagneten (8) betätigbar ist.

16. Schaltventil nach Patentanspruch 15, wobei der Schalthub eines Ankers (174) des Elektromagneten (8) über eine Hebelübersetzung (10) auf den Kolben (6) übertragbar ist.

17. Schaltventil nach Patentanspruch 16, wobei der Elektromagnet (8) in Flachankerbauweise und die Hebelübersetzung (10) als Festkörpergelenk ausgebildet sind.

## Claims

1. An on-off valve comprising a plunger (6) guided in a casing (2) which is pretensioned in a base position and which can be switched electrically or hydraulically so as to block or open a connection between a first and a second port (A, B), wherein the plunger (6) has a plurality of parallel control edges (50, 52, 54, 68, 70) each of which delimits a sectional opening cross-section by a case-fixed control edge (56, 58, 60), wherein said sectional opening cross-sections having a parallel hydraulic arrangement can be jointly actuated to open or close when the valve is switched, **characterized in that** the case-fixed control edges (56, 58, 60) are each formed at a circumferential sealing land (28) of the casing (2), and **in that** a valve sleeve (4) of the casing (2) is composed of a plurality of disks (12, 13) at each of which one of the sealing lands (28) is formed and each of which includes at least one pressure medium conduit (36, 37, 38, 39, 40, 41) opening into a radially expanded disk chamber (34) adjacent to the sealing land (28).

2. An on-off valve according to claim 1, wherein upstream of the sectional opening cross-sections the pressure medium volume flow is divided into sectional flows and downstream the latter are summed up.

3. An on-off valve according to claim 1, wherein the plunger is a valve actuator (6).

4. An on-off valve according to any one of claims 1 to 3, wherein the pressure medium passages (36 - 41) of adjacent disks (12, 13) are alternately connected to the first or second port (A, B) in a hydraulic manner.

5. An on-off valve according to any one of the preceding claims, wherein in a disk (12, 13) respective pressure medium conduits (36, 37; 38, 39; 40, 41) arranged coaxially with respect to each other form a pair of pressure medium conduits opening on both sides into the disk chamber (34).

6. An on-off valve according to claim 5, wherein three pairs of pressure medium conduits (36, 37; 38, 39; 40, 41) are provided which extend in parallel to the disk plane and one of which is arranged as a diagonal and two are arranged axially in parallel thereto.

7. An on-off valve according to any one of the preceding claims, wherein the disks (12, 13) have a substantially circular outer circumference, wherein four preferably circular-arc shaped recesses (18, 19, 20, 21) offset by 90° with respect to one another are provided and the pressure medium conduit (36, 37; 38, 39; 40, 41) opens into at least one of the recesses (18, 19, 20, 21), and wherein in the fitting position said recesses (18, 19, 20, 21) form a respective junction conduit (76, 78) between the pressure medium conduits (36 - 41) and the ports (A, B).

8. An on-off valve according to claims 6 and 7, wherein the pressure medium conduits (36 - 41) open into two diametrally disposed recesses (18, 20).

9. An on-off valve according to claim 7 or 8, wherein each second disk (13) of the disk sleeve (4) is arranged offset by 90° with respect to the adjacent disk (12).

10. An on-off valve according to claim 8 or 9, wherein the casing (2) has a mounting bush (80) for the disks (12, 13) with radial connecting bores (84, 86, 88, 90) passing through the shell thereof, each of said connecting bores being connected to one of the ports (A, B) in a hydraulic manner and opening into one of the junction conduits 76, 78).

11. An on-off valve according to claim 10, wherein the connecting bores (84, 86, 88, 90) are intersecting diagonal bores.

12. An on-off valve according to claim 10 or 11, wherein radially outside the connecting bores (84, 86, 88, 90) mounting chambers (106, 108, 110, 111) are formed for reservoirs or the like in the casing (2).

13. An on-off valve according to claim 7, 8 or 9, wherein the ports (A, B) are formed in a bottom plate (146) of the casing (2) and are connected to the junction conduits (76, 78) by means of angular bores (148, 152, 150; 154).

14. An on-off valve according to any one of the preceding claims, wherein the sealing lands (28) are provided with circumferential inclined surfaces (30, 32) on both sides.

15. An on-off valve according to any one of the preceding claims, wherein the plunger (6) can be actuated via a solenoid (8).

16. An on-off valve according to claim 15, wherein the switching stroke of an armature (174) of the solenoid (8) can be transmitted to the plunger (6) by means of a lever transmission (10).

17. An on-off valve according to claim 16, wherein the solenoid (8) has a flat armature design and the lever transmission (10) is a solid-state joint.

## Revendications

1. Soupape de commutation comprenant un piston (6) guidé dans un boîtier (2), lequel piston est précontraint dans une position de base et peut être commuté de façon électrique ou hydraulique afin de fermer ou d'ouvrir une liaison entre un premier et un second raccordements (A, B), le piston (6) présentant plusieurs arêtes de commande parallèles (50, 52, 54, 68, 70), qui délimitent respectivement avec une arête de commande fixée au boîtier (56, 58, 60) une section transversale d'ouverture partielle, ces sections transversales d'ouverture partielle disposées de façon parallèlement hydraulique pouvant être mises sous tension ou hors tension conjointement lors de la commutation, **caractérisée en ce que** les arêtes de commande fixées au boîtier (56, 58, 60) sont réalisées respectivement sur une nervure d'étanchéité circulaire (28) du boîtier (2), et **en ce qu'**un manchon de soupape (4) du boîtier (2) est composé d'une pluralité de disques (12, 13), sur lesquels respectivement une des nervures d'étanchéité (28) est réalisée, et qui sont réalisés respectivement avec au moins un canal de milieu de pression (36, 37, 38, 39, 40, 41), qui débouche au voisinage de la nervure d'étanchéité (28) dans un espace de disque (34) radialement élargi.

2. Soupape de commutation selon la revendication 1, le courant de volume de milieu de pression étant divisé en amont des sections transversales d'ouverture partielle, en courants partiels et ceux-ci étant totalisés en aval.

3. Soupape de commutation selon la revendication 1, le piston étant réalisé comme tiroir de soupape (6).

4. Soupape de commutation selon l'une quelconque des revendications 1 à 3, les canaux de milieu de pression (36-41) des disques voisins (12, 13) étant reliés hydrauliquement en alternance au premier ou au second raccordement (A, B).

5. Soupape de commutation selon l'une quelconque des revendications précédentes, des canaux de milieu de pression (36, 37 ; 38, 39 ; 40, 41) respectivement disposés de manière coaxiale les uns par rapport aux autres dans un disque (12, 13) formant une paire de canaux de milieu de pression, qui débouche de part et d'autre dans l'espace de disque (34).

6. Soupape de commutation selon la revendication 5, trois paires de canaux de milieu de pression (36, 37 ; 38, 39 ; 40, 41) étant prévues, qui s'étendent parallèlement au plan du disque et parmi lesquelles l'une s'étend en tant que diagonale et deux sont disposées parallèlement à celle-ci.

7. Soupape de commutation selon l'une quelconque des revendications précédentes, les disques (12, 13) présentant une périphérie extérieure sensiblement circulaire, quatre évidements (18, 19, 20, 21) décalés de 90° les uns des autres, de préférence en forme d'arc de cercle, étant prévus, et le canal de milieu de pression (36, 37, 38, 39, 40, 41) débouche dans au moins un des évidements (18, 19, 20, 21), et ces évidements (18, 19, 20, 21) formant dans la position de montage respectivement un canal de liaison (76, 78) entre les canaux de milieu de pression (36-41) et les raccordements (A, B).

8. Soupape de commutation selon les revendications 6 et 7, les canaux de milieu de pression (36-41) débouchant dans deux évidements (18, 20) diamétralement opposés.

9. Soupape de commutation selon la revendication 7 ou 8, chaque second disque (13) du manchon de disque (4) étant disposé en étant décalé de 90° par rapport au disque voisin (12).

10. Soupape de commutation selon la revendication 8 ou 9, le boîtier (2) présentant une douille de réception (80) pour les disques (12, 13), dont l'enveloppe est traversée par des alésages de raccordement radiaux (84, 86, 88, 90), qui sont respectivement reliés hydrauliquement à un des raccordements (A, B) et débouchent dans un des canaux de liaison (76, 78).

11. Soupape de commutation selon la revendication 10, les alésages de raccordement (84, 86, 88, 90) étant réalisés comme des alésages diagonaux se croisant.

12. Soupape de commutation selon la revendication 10 ou 11, des espaces de réception (106, 108, 110, 111) pour accumulateurs ou similaires étant réalisés radialement à l'extérieur des alésages de raccordement (84, 86, 88, 90) dans le boîtier (2).

13. Soupape de commutation selon la revendication 7, 8 ou 9, les raccordements (A, B) étant réalisés dans une plaque de fond (146) du boîtier (2) et reliés par des alésages angulaires (148, 152, 150 ; 154) aux canaux de liaison (76, 78).

14. Soupape de commutation selon l'une quelconque des revendications précédentes, les nervures d'étanchéité (28) étant pourvues de part et d'autre de surfaces obliques circulaires (30, 32).

15. Soupape de commutation selon l'une quelconque des revendications précédentes, le piston (6) pouvant être actionné par un électro-aimant (8).

16. Soupape de commutation selon la revendication 15, la poussée de commutation d'un induit (174) de l'électro-aimant (8) pouvant être transmis par une transmission de levier (10) sur le piston (6).

17. Soupape de commutation selon la revendication 16, l'électro-aimant (8) étant réalisé dans la structure d'induit plat et la transmission de levier (10) comme une articulation à corps solide.
